# FASCICULE DE BREVET EUROPEEN

(11) **EP 0 889 399 B1**
(45) Date de publication et mention de la délivrance du brevet: **13.12.2000**
(21) Numéro de dépôt: 98401563.6
(22) Date de dépôt: 25.06.1998
(51) Int. Cl.: G06F 9/44

(54) **Architecture de système de traitement de l'information**
Informationsverarbeitungssystemarchitektur
Information processing system architecture

(30) Priorité: 02.07.1997 FR 9708332
(43) Date de publication de la demande: 07.01.1999
(73) Titulaire: BULL S.A., 78430 Louveciennes (FR)
(72) Inventeur: Akriche, Jean, 95580 Margency (FR); Lanquetin, Jean-Marie, 78000 Versailles (FR); Leteinturier, Alain, 75012 Paris (FR); Sitbon, Gérard, 94400 Vitry (FR); Touzan, Jean-François, 91300 Massy (FR)
(74) Mandataire: Denis, Hervé

(56) Documents cités:
- EP-A- 0 458 495
- TSCHAMMER V ET AL: "On the co-operative management of domains in open distributed systems" PROCEEDINGS OF THE FOURTH WORKSHOP ON FUTURE TRENDS OF DISTRIBUTED COMPUTING SYSTEMS (CAT. NO.93TH0574-4), 1993 4TH WORKSHOP ON FUTURE TRENDS OF DISTRIBUTED COMPUTING SYSTEMS, LISBON, PORTUGAL, 22-24 SEPT. 1993, pages 47-53, XP002059529 ISBN 0-8186-4430-3, 1993, LOS ALAMITOS, CA, USA, IEEE COMPUT. SOC. PRESS, USA
- LEE K -H: "Design and implementation of a multi-domain configuration management system" PROCEEDINGS OF IEEE SINGAPORE INTERNATIONAL CONFERENCE ON NETWORKS/INTERNATIONAL CONFERENCE ON INFORMATION ENGINEERING '93. THEME: COMMUNICATIONS AND NETWORKS FOR THE YEAR 2000 (CAT. NO.93TH0588-4), PROCEEDINGS OF IEEE SINGAPORE INTERNATIONAL CONFERE, pages 258-262 vol.1, XP002059530 ISBN 0-7803-1445-X, 1993, NEW YORK, NY, USA, IEEE, USA
- SLOMAN M S ET AL: "Domain management for distributed systems" INTEGRATED NETWORK MANAGEMENT, 1. PROCEEDINGS OF THE IFIP TC 6/WG 6.6 SYMPOSIUM, BOSTON, MA, USA, 16-17 MAY 1989, pages 505-516, XP002060126 ISBN 0-444-87398-8, 1989, AMSTERDAM, NETHERLANDS, NORTH-HOLLAND, NETHERLANDS
- LUBKIN D C: "DSEE: A SOFTWARE CONFIGURATION MANAGEMENT TOOL" HEWLETT-PACKARD JOURNAL, vol. 42, no. 3, 1 juin 1991, pages 77-83, XP000260722

## Description

La présente invention concerne une architecture de système de traitement de l'information.

Elle concerne plus particulièrement une architecture pour des systèmes de grande puissance, du type dit "mainframe", selon la terminologie anglo-saxonne.

De tels systèmes, très complexes, intègrent de très nombreux sous-systèmes, tant matériels que logiciels qui coopèrent entre eux. Il n'est pas rare que des produits logiciels constituants de ces systèmes, comportent des centaines de milliers, voire des millions de lignes de code.

Dans ce contexte, un des problèmes les plus difficiles à résoudre est d'obtenir la cohérence et la compatibilité entre les différents composants, notamment lorsqu'ils doivent être mis à jour (passage à des versions plus récentes, ajout de modules ou de fonctions, etc.).

En effet, outre la complexité intrinsèque rappelée, on doit également tenir compte du fait que les différents produits composant le système ont des provenances disparates, que ce soit en interne (même si des règles de développement communes sont en vigueur) ou en externe (produits disponibles sur le marché).

Dans l'état de la technique, il existe deux types principaux d'architectures.

Une première architecture appartient au type dit "propriétaire". Sous ce vocable, on désigne des systèmes dont l'architecture est conçue par le constructeur de matériel informatique.

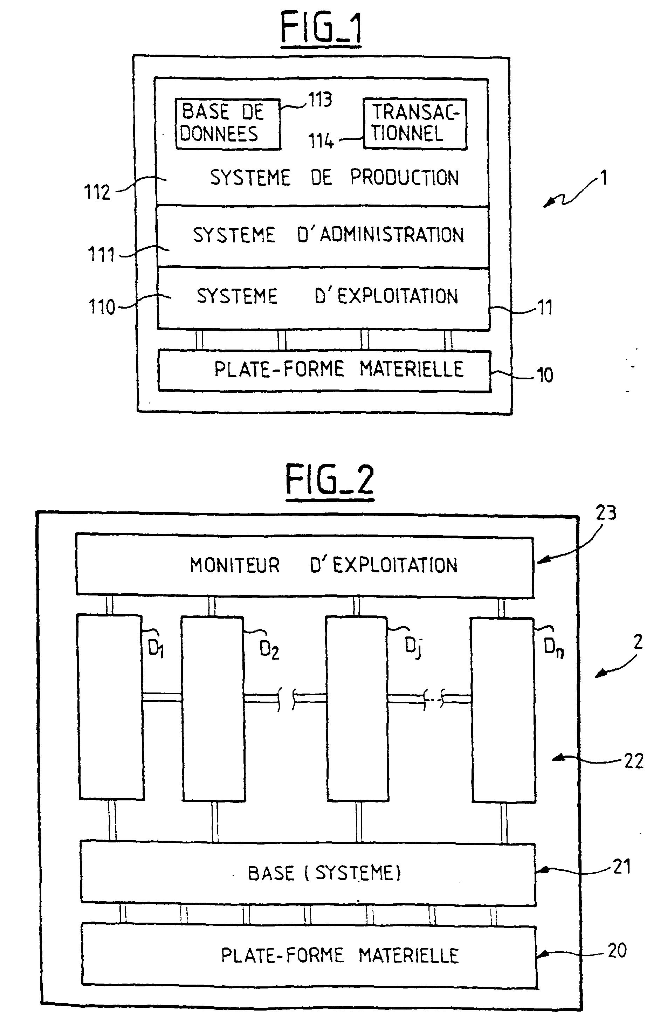

L'architecture se caractérise essentiellement par une intégration poussée et se présente sous la forme d'un système monolithique. La figure 1 annexée à la présente description illustre schématiquement une telle architecture.

Le système 1 comprend une plate-forme matérielle 10 coopérant avec un ensemble monolithique 11 de systèmes logiciels. Ceux-ci peuvent comprendre un système d'exploitation 110, ou "OS" selon la terminologie anglo-saxonne ("Operating System"), un système d'administration 111, qui supervise les fonctions systèmes, et un système de production 112. Ce dernier peut comprendre, par exemple, des gestionnaires de bases de données, 113, et des processus transactionnels, 114. La plate-forme matérielle, 10, comprend les dispositifs habituels d'un système de traitement de données : unité centrale, mémoire centrale, mémoires de masse, etc., qu'il est inutile de détailler plus avant.

Dans le système de la figure 1, tous les composants de l'ensemble 11 sont pris en compte lors de l'installation initiale et lors des mises à jour ultérieures (changement de version du système 1). Dans ce type d'environnement, la cohérence du système est obtenue par la validation globale des interfaces entre tous les composants. Pour l'utilisateur, ces dispositions garantissent une grande robustesse du système indépendamment de ses évolutions. En outre, elles permettent un suivi simplifié des versions successives du système. Enfin, elles assurent une disponibilité maximale et une grande sécurité de fonctionnement, puisque les risques de dysfonctionnement sont réduits au minimum.

Cependant, il existe en contrepartie des contraintes et des inconvénients sérieux.

Ceux-ci trouvent leur origine dans le fait que les systèmes sont monolithiques. Quel que soit le composant à changer et/ou la fonction à ajouter, il est nécessaire de faire évoluer tout le système. La mise à jour ne peut être que globale.

Pour illustrer de façon pratique cet inconvénient, on peut citer, à titre d'exemple, le cas d'un utilisateur qui ne désirerait remplacer que le logiciel de gestion de bases de données 113, ou le mettre à jour en faisant appel à une version plus récente. Dans cette hypothèse, il sera obligé d'implanter une version nouvelle complète du système.

Cela présuppose d'ailleurs que cette version nouvelle, comprenant le logiciel de gestion de base de données à remplacer ou à mettre à jour, soit disponible.

Enfin, cela entraîne une indisponibilité importante du système de traitement de données, couramment plusieurs jours pour de très gros systèmes.

Il s'ensuit que ce type d'architecture a relativement peu de souplesse et présente des possibilités d'évolution limitées.

Une seconde architecture appartient au type dit "ouvert". Sous ce vocable, on désigne des systèmes dont l'architecture n'est pas définie par un seul constructeur. Ces systèmes sont apparus, notamment, avec l'émergence des systèmes d'exploitation du type "UNIX" (marque déposée) ou similaires, par exemple "AIX" (marque déposée).

Il est clair que ce type d'architecture est très attractif, car il permet de faire appel à des logiciels hétérogènes, c'est-à-dire d'origines diverses, coexistant sur une même machine.

Pour ce type d'architecture, l'installation et/ou la mise à jour d'un logiciel ne concernent que le produit lui-même, et non le système dans sa globalité.

Puisque des composants de base peuvent être installés ou mis à jour à tout moment, une architecture "ouverte" offre donc une très grande souplesse et des facilités d'évolution importantes, du moins en théorie.

En effet, ce type d'architecture n'est pas non plus exempt d'inconvénients. En particulier, il n'offre aucune garantie de bon fonctionnement avec les autres composants logiciels : possibilités d'incompatibilité diverses, etc.

Or, malgré les inconvénients qui lui sont inhérents, un système à architecture ouverte reste très séduisant pour les utilisateurs.

En effet, il permet de satisfaire, tout ou partie, des besoins des utilisateurs de systèmes informatiques qui se font actuellement sentir, parmi lesquels :
- autonomie, c'est-à-dire la possibilité de faire évoluer un ou plusieurs produits du système, indépendamment du reste du système ;
- parallélisme, c'est-à-dire la possibilité de faire tourner plusieurs versions du même produit simultanément ;
- compatibilité, c'est-à-dire pouvoir compter sur une garantie de compatibilité ascendante des produits et des interfaces entre produits ;
- mise à jour pendant l'exploitation courante du système, c'est-à-dire pouvoir changer de version d'un produit sans arrêt de l'exploitation ou, pour le moins, avec un arrêt minimum ;
- retour en arrière, c'est-à-dire la possibilité de revenir à une version antérieure d'un produit en cas de problème, sans arrêt de l'exploitation ;
- maîtrise des évolutions, c'est-à-dire la possibilité de rester maître du processus d'évolution par la mise en oeuvre de procédures automatisées et simplifiées ;
- et rapidité des évolutions et de la maintenance, c'est-à-dire pouvoir compter sur un délai minimum entre une demande d'évolution ou de correction, et son installation effective sur site.

L'invention se fixe pour but de pallier les inconvénients des deux types d'architectures de l'art connu, tout en conservant les avantages de chacun.

Elle vise par ailleurs à répondre pleinement aux besoins des utilisateurs qui viennent d'être rappelés.

Pour ce faire, et selon une caractéristique principale, l'invention propose une architecture en domaines.

Un domaine regroupe un ensemble de fonctionnalités offertes par des composants logiciels du système. Il a des caractéristiques propres et évolue de façon indépendante. Le système est alors composé d'un ensemble de domaines ayant un minimum d'interdépendances, ce qui garantit la cohérence globale.

En d'autres termes, la souplesse d'installation et la mise à jour sont introduites à un niveau macroscopique qui reste maîtrisable, c'est-à-dire le domaine au sein duquel la cohérence reste assurée.

Chaque domaine, quel qu'il soit, est "vu" de façon identique par l'utilisateur, grâce notamment à des attributs qui lui sont affectés et un descripteur.

L'invention a donc pour objet une architecture de système de traitement de l'information, ledit système comprenant une plate-forme matérielle coopérant avec un ensemble de produits logiciels, caractérisée en ce que ledit ensemble est subdivisé en sous-ensembles dits domaines comprenant chacun au moins un desdits produits logiciels, en ce que chaque domaine contient un sous-ensemble dit descripteur donnant accès à des informations spécifiques déterminées, lesdites informations comprenant au moins un identifiant du domaine et des données décrivant les produits logiciels le composant, et en ce qu'il est prévu des moyens permettant l'installation et/ou la mise à jour desdits domaines à partir de règles prédéterminées et desdites informations spécifiques déterminées.

On constate que l'architecture selon l'invention présente de nombreux avantages, parmi lesquels :
- Souplesse de mise à jour : il n'y a jamais nécessité de procéder à une mise à jour totale du système, celle-ci pouvant être effectuée domaine par domaine.
- Indisponibilité réduite de la machine : la mise à jour pouvant être effectuée en plusieurs phases, celles relatives aux quelques domaines nécessitant un arrêt de production peuvent avoir lieu à des moments choisis. Dans une variante avantageuse de l'invention, la plupart des domaines peuvent être mis à jour sur une copie secondaire pendant que la production continue sur une copie primaire. Seul le basculement final peut entraîner, pour des domaines spécifiques, l'arrêt de la production.
- Sécurité des changements de version : certains domaines pouvant fonctionner en double occurrence, ils permettent des phases de tests et des retours en arrière en cas de problème.
- Réduction des temps de mise à jour : les mises à jour s'effectuant au niveau du domaine, leur réalisation peut être étudiée et planifiée au mieux, en fonction des contraintes d'exploitation.
- Souplesse du choix des configurations installées : l'utilisateur a la possibilité de n'installer que les domaines qui lui sont nécessaires et maîtriser complètement l'évolution des versions de chaque domaine, dans la seule limite des contraintes imposées par les dépendances éventuelles et les conditions de support et de maintenance.

En résumé, l'architecture selon l'invention permet de cumuler les avantages des architectures de type "propriétaire" et de type "ouvert" : robustesse, disponibilité, sécurité, souplesse et évolutivité.

L'invention sera mieux comprise et d'autres caractéristiques et avantages apparaîtront à la lecture de la description qui suit en référence aux figures annexées, parmi lesquelles :
- la figure 1 illustre schématiquement une architecture de type "propriétaire" selon l'art connu ;
- la figure 2 illustre schématiquement un exemple de réalisation d'une architecture selon l'invention ;
- la figure 3 illustre schématiquement la structure d'un domaine, élément constitutif de base de l'architecture de la figure 2 ;
- les figures 4a à 4d illustrent différents types de domaines ;
- les figures 5a et 5b illustrent un exemple d'organisation hiérarchique des domaines ;
- et la figure 6 illustre un domaine particulier et ses relations avec les autres domaines du système.

On va maintenant décrire de façon détaillée l'architecture d'un système de traitement de données selon l'invention par référence à la figure 2.

Le système 2 comprend, comme précédemment une plate-forme matérielle 20. Cependant, selon une caractéristique importante de l'invention, l'ensemble des logiciels et progiciels est scindé en domaines, 21 à 23. De façon plus particulière, il existe un ensemble de domaines, D₁, D₂, ..., D_{*j*}, ...,D_{*n*}, regroupés sous la référence générale 22, et deux domaines spécifiques, 21 et 23. Ces deux derniers domaines sont, respectivement, le domaine 21 fournissant le système d'exploitation (ou "OS") et les logiciels de base associés du système, et le domaine 23 fournissant le moniteur d'exploitation du système 2. Le système 2 comprend au minimum ces deux domaines, 21 et 23, en sus de la plate-forme matérielle 20. C'est la version du domaine 23, moniteur d'exploitation du système, qui identifie complètement l'ensemble du système 2 et de ses composants de base, c'est-à-dire, comme il le sera explicité ci-après, les différents domaines et les fonctionnalités qu'ils offrent.

Les indices *j* et *n* repérant les domaines sont purement arbitraires, *j* étant un indice intermédiaire et *n* le nombre maximal de domaines (non compris les domaines spécifiques 21 et 23), du moins dans un état de configuration donné du système.

Les autres domaines, 22, sont optionnels et sont sélectionnés par l'utilisateur en fonction de ses besoins précis et de l'application considérée. Dans ce qui suit, on appellera ces domaines "domaines banalisés", en ce sens qu'ils sont "vus" de façon semblable par le système, comme il le sera explicité ci-après, même si leur contenu est différent. Le système 2 est donc entièrement modulaire au niveau des domaines.

Pour fixer les idées, les domaines suivants peuvent être implémentés dans le système : fonctions d'administration du système, fonctions de traitement par lots, fonctions de gestion de bases de données, fonction de sécurité, fonctions de gestion des processus transactionnels et fonctions d'interopérabilité.

Un système déterminé 2, répondant aux besoins de l'utilisateur, est installé dans un état donné. En d'autres termes, la configuration et les versions des domaines sont précisément définies.

Cette installation peut être obtenue de deux façons :
- Il s'agit tout d'abord de l'installation initiale proprement dite, que l'on peut appeler "clés en mains", c'est-à-dire d'une pré-configuration réalisée en usine.
- Il peut s'agir aussi d'une mise à jour incrémentale de la machine sur site d'exploitation. Les mises à jour concernent alors un ou plusieurs domaines, selon les besoins. Mais il n'est jamais nécessaire, contrairement aux systèmes de type "propriétaire" de l'art connu, de modifier tout le système 2.

Il existe en réalité deux types principaux de mise à jour :
- La mise à jour proprement dite (ou "update" selon la terminologie anglo-saxonne) : un domaine donné, D_{*j*}, ayant fait l'objet d'une installation initiale, il s'agit d'en installer une version plus récente pour y incorporer, soit des nouvelles fonctionnalités, soit des corrections. Cette opération entraîne notamment le changement de la version du domaine.
- Ajout (ou "add-on" selon la terminologie anglo-saxonne) : il s'agit de l'ajout pur et simple d'un domaine particulier, par exemple D_{*n*}, qui n'avait pas été installé initialement.

Il doit être clair également que un ou plusieurs domaines peuvent être supprimés.

Tous les domaines, 21 à 23, coopèrent avec la plate-forme matérielle 20, directement ou via le domaine de base ou système d'exploitation 21. De même, tous les domaines "banalisés" 22 coopèrent avec les domaines spécifiques, 21 et 23. Des liens verticaux (sur la figure 2) illustrent ce mode de fonctionnement.

Selon un autre aspect de l'invention, il est avantageux que les domaines 22 présentent la plus grande indépendance les uns vis-à-vis des autres. En d'autres termes, il est important que les interactions entre ces domaines soient minimisées. Généralement, il existe cependant des relations entre certains des domaines D₁ à D_{*n*}. Ces relations ont été figurées par des liens horizontaux (sur la figure 2).

Bien que le nombre de domaines ne soit pas, *a priori*, limité dans la pratique, le nombre raisonnable de domaines est préférentiellement inférieur à dix et, en tout cas, devrait se situer dans la gamme de dix à vingt au maximum.

Dans le cas contraire, la complexité augmente de façon très importante : fonction en *x*(*x*-1)/2, avec *x* nombre total de domaines. Les avantages apportés par l'architecture selon l'invention s'en trouvent alors largement amoindris.

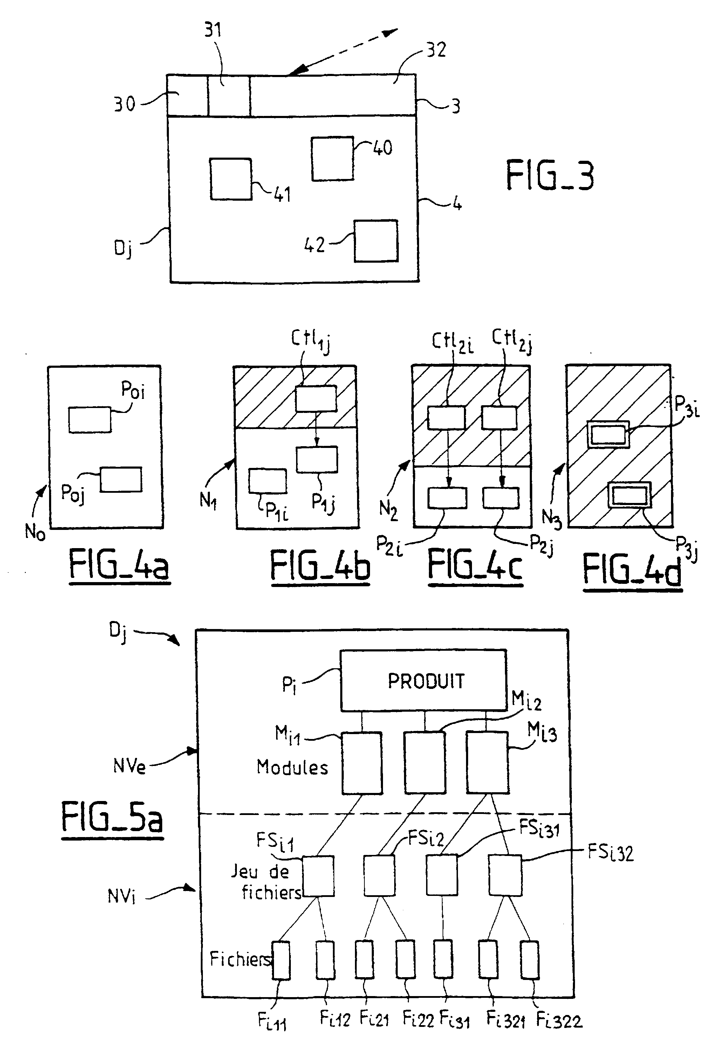

On va maintenant décrire de façon plus détaillée l'unité élémentaire que constitue un domaine, D_{*j*}, par référence à la figure 3. Cette figure 3 illustre schématiquement la structure d'un domaine, par exemple le domaine D_{*j*}, d'indice arbitraire *j*.

On peut définir un domaine D_{*j*} comme étant une unité indépendante d'intégration, d'installation et de mise à jour. Elle comprend un ou plusieurs logiciels ou progiciels de provenances diverses : interne ou externe, que l'on appellera produits. Par "interne", on entend des applications de type "propriétaire". Par "externe", on entend des applications disponibles sur le marché.

De façon plus précise, un domaine comprend deux parties principales.

Une première partie 4 est constituée des différents produits offrant des fonctionnalités propres à un domaine, repérées 40 à 42. A titre d'exemple, un domaine de traitement par lot offrira au moins les fonctions suivantes : gestions des impressions et des sauvegardes.

La seconde partie 3 constitue une interface particulière du domaine D_{*j*}, que l'on peut appeler "descripteur" qui donne accès à des données décrivant le domaine et ses propriétés.

Les fonctionnalités fournies par les domaines D_{*j*} sont supportées par des produits qui se caractérisent, entre autres, par la manière dont ils sont intégrés dans le système 2, par la façon dont ils s'installent et s'exécutent et par les autres produits (c'est-à-dire les autres domaines) dont ils dépendent éventuellement.

Un domaine D_{*j*} ne peut regrouper que des produits ayant des caractéristiques identiques, ou pour le moins compatibles. Celles-ci lui sont associées sous forme de trois attributs : le niveau d'insertion, le type d'occurrence et les dépendances.

C'est donc les domaines qui assurent et garantissent les différentes caractéristiques avantageuses recherchées pour le système, dans sa globalité, en raison de l'homogénéité des produits les composant.

La partie 3 ou descripteur doit donc donner accès à des informations caractérisant un domaine particulier D_{*j*}, notamment à un identifiant concernant son nom et sa version, et à une liste de ses composants. En outre, un domaine D_{*j*} est caractérisé par un certain nombre d'attributs, comme il a été indiqué, qui vont être détaillés ci-après. Toutes ces informations sont nécessaires pour pouvoir réaliser les opérations de base susmentionnées : installation et mise à jour des domaines. Elles décrivent aussi le mode de fonctionnement des produits composant le domaine.

Dans un mode de réalisation préféré de l'invention, les attributs sont au nombre de trois, à savoir le niveau d'insertion, le type d'occurrence et les dépendances.

Un niveau d'insertion est caractérisé par la manière dont les produits constituant le domaine y sont intégrés, c'est-à-dire quelles caractéristiques fonctionnelles sont contrôlées, notamment lors des opérations d'installation et, surtout, de mise à jour.

Pour fixer les idées, et dans un mode de réalisation pratique de l'invention, on a défini quatre niveaux d'insertion.

Ces niveaux sont illustrés schématiquement par les figures 4a à 4d, représentant quatre domaines arbitraires, de niveaux d'insertion respectifs, N₀ à N_{3.}

Tout d'abord, il est utile de rappeler que les produits constituant les domaines peuvent être des produits développés par le constructeur lui-même, que l'on a appelé "propriétaire", c'est-à-dire d'origine interne, ou des produits externes. Ces derniers peuvent avoir été complétés pour être mieux adaptés au système 2 (figure 2). On parle alors de valeur ajoutée.

Ceci étant rappelé, le "niveau 0", N₀, illustré par la figure 4a, ne comprend que des produits externes, par exemple repérés P₀_{*i*} et *P*₀_{*j*}, sans aucune valeur ajoutée. Vu du système, un produit, P₀_{*i*} ou *P*₀_{*j*}, d'un domaine de niveau 0 est identique à un produit qui serait vu dans un système ouvert selon l'art connu. Aucun contrôle n'est exercé sur ces produits lors de leur installation et/ou leur mise à jour.

En réalité, un domaine de niveau 0 ne constitue qu'un pseudo-domaine. On peut d'ailleurs considérer que les produits, par exemple P₀_{*i*} et *P*₀_{*j*}, constituent un ensemble de produits installés dans le système, mais qui ne présentent pas, à proprement parler, les caractéristiques de l'invention. Ce niveau autorise cependant une souplesse supplémentaire offerte à l'utilisateur du système.

Au "niveau 1", N₁, illustré par la figure 3b, les produits, par exemple P₁_{*i*} et P₁_{*j*}, ne sont pas, à proprement parler, intégrés dans le système, mais il peut exister une "valeur ajoutée" à ces produits et/ou un contrôle de la version du produit installé, du moins pour certains des produits.

Sur la figure 4b (et les suivantes), on a représenté symboliquement en hachuré les parties du domaine comportant des composants réellement intégrés, par exemple des routines de contrôle CTL1j du produit P₁_{*j*}, le produit P₁_{*i*}, n'étant pas contrôlé du tout (comme dans le cas du niveau 0).

Les produits, P₁_{*i*} et P₁_{*j*}, conservent leur conditionnement d'origine ("packaging") et le support prévu par leur concepteur. La mise à jour de ces produits est faite indépendamment de celle du domaine et peut être contrôlée ou non, comme il a été indiqué ci-dessus, par comparaison avec des données ou à l'aide de règles préétablies.

A titre d'exemple de réalisation pratique, le domaine de base 21 (figure 2) fournit le système d'exploitation, par exemple de type "AIX" (marque enregistrée). Le domaine 21 est alors au niveau d'insertion 1.

La figure 4c illustre un domaine de "niveau 2", N₂. A ce niveau, tous les produits, par exemple P₂_{*i*} et P₂_{*j*}, sont sous le contrôle de routines intégrées, Ctl₂_{*i*} et Ctl₂_{*j*}. A cette exception près, le niveau 2, N₂, est tout à fait similaire au niveau 1, N1. Il est donc inutile d'en redécrire les caractéristiques.

La figure 4d illustre un domaine de niveau d'insertion 3, N₃, ou niveau supérieur. Ce niveau répond pleinement aux caractéristiques de l'invention. En effet, tous les composants, par exemple P_{*3i*} et P_{*3j*}, sont entièrement intégrés dans le domaine, ce qui est représenté symboliquement, sur la figure 4d, par un double trait entourant ces produits.

S'il s'agit de produits d'origine externe, leur conditionnement est entièrement redéfini et ces produits s'installent et se mettent à jour selon une procédure standard propre au système, procédure qui ne nécessite aucune expertise sur le produit installé. Il ne s'agit plus alors que de contrôles simples, tels que le seul contrôle de la version du produit à installer ou à mettre à jour.

Un domaine, à ce niveau d'insertion, peut donc garantir pleinement toutes les caractéristiques avantageuses recherchées dans le cadre de l'invention : robustesse, disponibilité, sécurité, souplesse et évolutivité.

Un deuxième attribut associé à un domaine particulier D_{*j*} (figure 3) est le type d'occurrence. Il caractérise le nombre d'instances que l'on peut faire coexister et/ou exécuter simultanément sur un même noeud, étant entendu qu'un noeud est un élément matériel d'un système distribué.

De façon avantageuse, tous les produits composant un même domaine, D_{*j*}, doivent présenter le même type d'occurrence. Dans le cas contraire, on retient le type d'occurrence le plus faible.

On peut définir trois types d'occurrence principaux :
- Un premier type d'occurrence, appelé ci-après "SISR" (ou "Single Intall & Single Run"), permet une seule occurrence du domaine concerné et, a fortiori, une seule exécution. Le remplacement d'une version d'un domaine ne peut être réalisé qu'en remplaçant la précédente.
- Un deuxième type d'occurrence, appelé ci-après "MISR" (ou "Multiple Intall & Single Run"), permet une installation multiple du domaine concerné sur un même noeud, mais toujours une seule exécution. Chaque occurrence correspond à une version différente du domaine, mais la même version d'un produit peut exister en plusieurs occurrences dans des versions différentes d'un domaine.
- Un troisième type d'occurrence, appelé ci-après "MIMR" (ou "Multiple Intall & Multiple Run"), permet une installation multiple du domaine concerné sur un même noeud et ainsi qu'une exécution multiple.

Le type d'occurrence associé à un domaine a une grande importance, car il conditionne directement la disponibilité du système pendant les mises à jour.

Avec une occurrence de type "SISR", il n'existe qu'une instance du domaine concerné et on ne peut exécuter que cette nouvelle instance et il n'est pas possible de revenir en arrière, du moins sans supprimer l'instance en cours. En outre, la mise à jour d'un domaine peut nécessiter l'arrêt complet du système.

Avec une occurrence du type "MISR", plusieurs instances correspondant à des évolutions du domaine peuvent coexister, bien qu'une seule soit exécutable à un instant donné. On peut cependant choisir l'instance qui sera exécutée. Il est donc possible de revenir en arrière, car il est possible de choisir l'instance à exécuter. En d'autres termes, il est possible d'arrêter l'instance nouvelle, sans refaire une mise à jour. La suppression de l'ancienne instance peut être complètement désynchronisée de l'installation de la nouvelle instance. L'exploitation peut continuer pendant le temps de la mise à jour. Elle ne doit être interrompue, du moins en ce qui concerne les produits du domaine concerné, qu'au moment du basculement vers la nouvelle version.

Avec une occurrence du type "MIMR", plusieurs instances pouvant coexister et toutes étant exécutables simultanément, il devient possible de mettre en service une nouvelle version de façon progressive, par exemple en maintenant l'exploitation sur l'ancienne version et en exécutant des tests sur la nouvelle. On obtient alors la maîtrise complète du basculement vers la nouvelle version. En outre, sauf contraintes particulières, ce type d'occurrence autorise l'installation d'une nouvelle version sans interruption de l'exploitation du produit concerné.

Ce type d'occurrence offre donc une souplesse maximale, tout en assurant les caractéristiques avantageuses rappelées.

On doit noter enfin que, au prix d'un reconditionnement, un produit d'origine externe offrant une occurrence initiale du type "SISR", par exemple, peut offrir une occurrence supérieure de type "MISR", voire "MIMR", ce qui le rend plus attractif.

Un troisième attribut associé à un domaine particulier D_{*j*} (figure 3) concerne les dépendances. Les dépendances indiquent le ou les autres domaines, D₁ à D*n*, du système 2 (figure 2) dont la présence est nécessaire au bon fonctionnement des produits du domaine D_{*j*} concerné. Les dépendances d'un domaine D_{*j*} sont constituées par l'ensemble des dépendances identifiées au niveau de chaque produit constituant ce domaine.

Pour obtenir les caractéristiques avantageuses de l'architecture de l'invention, il est avantageux de ne regrouper, dans un même domaine, que des produits ayant les mêmes dépendances. Les domaines dits de base (figure 2 : 21) et de moniteur d'exploitation (figure 2 : 23) constituant le coeur du système, tous les autres domaines, D₁ à D_{*n*}, ont une dépendance vis-à-vis de ces deux domaines spécifiques. Enfin, lorsqu'un domaine a une occurrence multiple, du type "MISR" ou MIMR", il ne doit jamais exister de dépendances entre ses différentes occurrences.

On va maintenant décrire de façon détaillée un exemple d'organisation pratique d'un domaine D_{*j*}.

Dans cet exemple pratique, le domaine est organisé selon une hiérarchie d'objets. Cette structure ne s'applique, *stricto sensu,* qu'aux domaines dont l'attribut insertion est de niveau 3 (voir figure 4d) ou, pour les domaines de niveaux d'insertion 1 et 2 (figures 4b et 4c), aux produits entièrement intégrés (zones hachurées de ces figures).

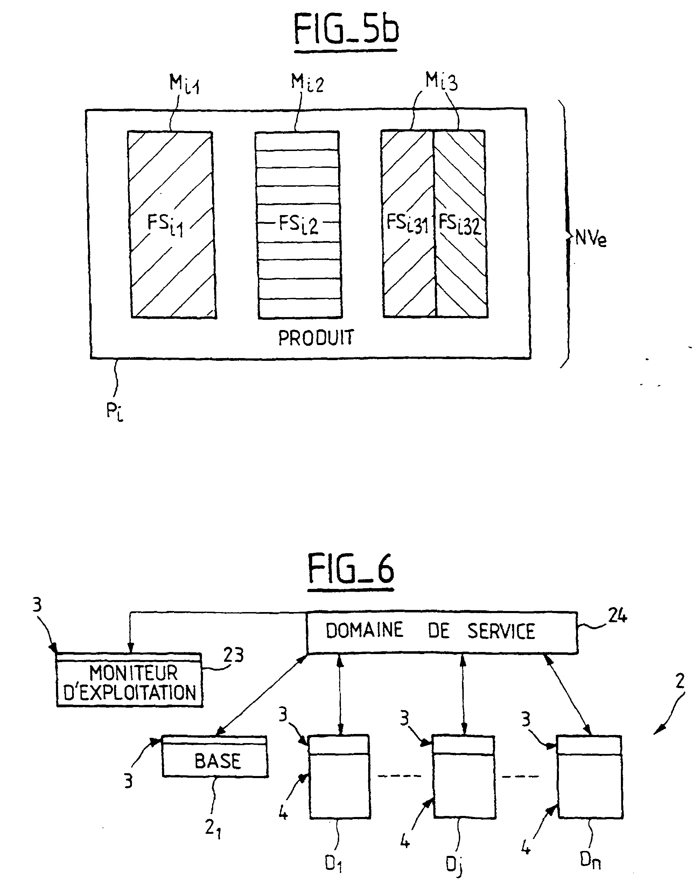

On va considérer ci-après, par référence aux figures 5a et 5b, pour des raisons de simplification, un domaine D_{*j*} ne contenant qu'un seul produit P_{*i*}, étant admis que ces dispositions s'appliquent tout aussi bien à des domaines comprenant plusieurs produits. Il est en effet clair que la structure de base d'un domaine est le produit, comme le montre plus particulièrement la figure 5b, un domaine comprenant un ou plusieurs produits.

On peut cependant distinguer une structure hiérarchique à quatre niveaux, dans un mode de réalisation avantageux de l'invention.

Le premier niveau est le produit P_{*i*} proprement dit. C'est un ensemble homogène offrant une fonctionnalité donnée. Le produit est constitué d'un ensemble de modules M_{*i*}₁ à M_{*i*}₃ (trois dans l'exemple décrit sur la figure 5a) ou "packages", qui constituent le deuxième niveau hiérarchique.

Le deuxième niveau regroupe donc les modules M_{*i*}₁ à M_{*i*}₃. Un module M_{*i*}₁ à M_{*i*}₃, est un sous-ensemble fonctionnel homogène d'un produit P_{*i*}. Il est constitué d'un ensemble de jeux de fichiers ou "filesets" FS_{*i*}₁, FS_{*i*}₂ et FS_{*i*}₃₁ et FS_{*i*}₃₂ (dans l'exemple décrit sur la figure 5a).

Ces deux niveaux constituent un premier niveau de visibilité externe, NVe, c'est-à-dire "visible" par l'utilisateur pour une mise à jour du domaine D_{*j*} et/ou son installation initiale.

Il est ainsi possible d'installer tout ou partie des produits d'un domaine *D*_{*j*}*,* ainsi que tout ou partie des modules les composant, en tenant compte naturellement de contraintes de cohérence liées à ces produits.

Le troisième niveau regroupe les jeux de fichiers FS_{*i*}₁, FS_{*i*}₂ et FS_{*i*}₃₁ et FS_{*i*}₃₂. Un jeu de fichiers est un ensemble de fichiers contribuant à la réalisation de tout ou partie des fonctionnalités offertes par un module. Un module, par exemple les modules M_{*i*}₁ et M_{*i*}₂, peut ne comprendre qu'un seul jeu de fichiers, FS_{*i*}₁ et FS_{*i*}₂, respectivement. Au contraire, un module peut comprendre deux jeux de fichiers ou plus. C'est le cas du module M_{*i*}₃ qui comprend deux jeux de fichiers, FS_{*i*}₃₁ et FS_{*i*}₃₂.

Le quatrième niveau est constitué par les fichiers eux-mêmes, F_{*i*}₁₁, F_{*i*}₁₂, F_{*i*}₂₁, F_{*i*}₂₂, F_{*i*}₃₁, F_{*i*}₃₂₁ et F_{*i*}₃₂₂. Chaque jeu de fichiers peut comprendre un ou plusieurs fichiers.

Les troisième et quatrième niveaux constituent un niveau de visibilité interne NVi, non visible par l'utilisateur en utilisation normale. Cependant, les mises à jour concernent ce niveau.

La structure de base d'un produit étant hiérarchique, les règles suivantes doivent être suivies :
- un module appartient à un produit et à un seul et contient au moins un jeu de fichiers ;
- un jeu de fichiers appartient à un module et à un seul et contient au moins un fichier;
- un fichier appartient à un jeu de fichiers et à un seul.

Un domaine D_{*j*} est un ensemble de produits et de modules. Il comprend toujours, et au minimum, un module et un jeu de fichiers spécifiques décrivant le domaine D_{*j*}. Ce jeu de fichiers spécifiques comprend, au moins, un fichier également spécifique contenant la liste, c'est-à-dire le nom et le numéro de version, de tous les autres jeux de fichiers du domaine D_{*j*}. Outre son rôle de conteneur, ce fichier particulier sert à assurer la cohérence du domaine D_{*j*}. En effet, selon une caractéristique de l'invention, tous les autres jeux de fichiers du domaine D_{*j*} sont déclarés dépendants du jeu de fichiers spécifiques. L'installation ou la mise à jour d'un jeu de fichiers quelconque, appartenant au domaine D_{*j*}, n'est possible que si la version du domaine le permet, du moins en ce qui concerne les produits contrôlés ou intégrés (niveaux d'insertion 1 à 3).

L'usage des jeux de fichiers diffère d'ailleurs selon le niveau d'insertion considéré.

Dans un domaine de niveau d'insertion 3, les jeux de fichiers sont constitués de programmes exécutables du produit.

Dans un domaine de niveau d'insertion 1 ou 2, les jeux de fichiers ne contiennent pas, à l'exception des "valeurs ajoutées", les produits eux-mêmes, produits qui sont extérieurs au domaine, car d'origine externe. Ils servent seulement à les décrire et à effectuer des contrôles de version lors de l'installation et/ou de la mise à jour. De façon générale, pour l'installation d'un produit d'origine externe, il est nécessaire que le jeu de fichiers du domaine contienne des utilitaires sous la forme de "scripts" qui s'exécutent lors de l'installation effective et effectuent des vérifications sur le produit réel. Ces scripts peuvent également déclencher l'installation proprement dite du produit ou sa mise à jour.

Dans un mode de réalisation particulier de l'invention, illustré schématiquement par la figure 6, le système 2 peut comprendre un troisième domaine spécifique, 24, que l'on peut appeler domaine de service ou domaine "outils".

Ce domaine comprend, notamment, des produits logiciels ou des utilitaires, également spécifiques, permettant l'installation et/ou la mise à jour de tout ou partie des domaines, D₁ à D_{*n*}, et dans chaque domaine, de tout ou partie des produits, qu'ils soient d'origine interne, c'est-à-dire *a priori* entièrement intégrés aux domaines, ou externe, ces produits externes étant contrôlés ou non, selon le niveau d'insertion associé au domaine. Naturellement, les outils, ou "moteurs", d'installation et de mise à jour présents dans ce domaine sont en interaction avec les domaines, D₁ à D_{*n*}, ainsi qu'avec le domaine de base 21, et le domaine moniteur d'exploitation 23, et plus particulièrement avec leurs ensembles descripteurs 3. Les installations s'effectuent selon des règles enregistrées dans le domaine 24 et/ou les ensembles descripteurs 3.

Si on se reporte de nouveau à la figure 3, ce qui a été appelé descripteur 3 donne accès à, au moins, un enregistrement 30, contenant le nom et la version du domaine D_{*j*}, à un enregistrement 31, décrivant les attributs associés à ce domaine et à un enregistrement 32, de description du contenu du domaine et à un jeu de règles d'installation et de mise à jour du domaine et des produits le composant. Comme il a été décrit en regard de la figure 5a, chaque domaine D_{*j*} comporte un jeu de fichiers spécifique contenant la liste des autres jeux de fichiers, c'est-à-dire au moins leurs noms et leurs numéros de version. On peut également compléter ces informations par des scripts et des règles d'installation et de mise à jour des produits externes au domaine.

Bien que les informations rappelées ci-dessus puissent être réparties à l'intérieur d'un domaine donné, celui-ci est "vu" de l'extérieur de façon identique, via l'ensemble descripteur 3 qui constitue une interface standard pour tous les domaines, même si le contenu de l'information accédée diffère d'un domaine à l'autre.

De la description qui précède, on peut résumer l'organisation des domaines et les principales règles d'utilisation de ceux-ci comme suit :
- chaque domaine est constitué d'un ensemble de jeux de fichiers, qui peuvent eux-mêmes être regroupés en modules et produits ;
- chaque domaine contient un jeu de fichiers spécifiques qui détermine son nom et sa version ;
- tous les domaines sont composés de jeux de fichiers disjoints ou, en d'autres termes, deux domaines distincts quelconques ne contiennent que des jeux de fichiers différents ;
- toute évolution d'un jeu de fichiers d'un domaine, d'une version de ce domaine à la suivante, doit respecter la règle dite de "compatibilité ascendante" : un jeu de fichiers de version *m*+1, avec m arbitraire, en remplacement de la version *m*, n'entraîne aucune régression dans aucun des autres jeux de fichiers qui n'ont pas évolué ;
- et les dépendances fonctionnelles sont définies au niveau des jeux de fichiers, mais elles sont rendues visibles de façon globale au niveau des domaines (attribut de dépendances).

A la lecture de ce qui précède, on constate aisément que l'invention atteint bien les buts qu'elle s'est fixés.

Elle permet de conserver, à la fois, l'essentiel des avantages de l'architecture des systèmes dits "ouverts" et les avantages de l'architecture des systèmes dits "propriétaires", c'est-à-dire robustesse, disponibilité, sécurité, souplesse et évolutivité, sans en présenter les inconvénients.

Elle s'accommode même de l'installation et de la mise à jour de produits d'origine externe selon des procédures qui leur sont propres, avec un minimum de contrôle (version), voire sans contrôle du tout. Naturellement, dans ce dernier cas, et pour ce seuls produits, on se retrouve dans une configuration apparentée à celle présentée par un système "ouvert". Cette option permet d'obtenir une plus grande souplesse, toutefois en n'obtenant pas tous les avantages associés aux systèmes "propriétaires". Cependant, les produits concernés, s'ils existent, du fait de l'architecture en domaines propres à l'invention, peuvent être bien répertoriés et les risques d'apparition de problèmes également bien délimités. Il est enfin utile de rappeler que pour les produits d'origine externe, même sans "valeur ajoutée", et qui font l'objet d'un contrôle de version, ce contrôle limite les risques précités.

Il doit être clair cependant que l'invention n'est pas limitée aux seuls exemples de réalisations explicitement décrits, notamment en relation avec les figures 2 à 6. Notamment, le nombre de domaines composant un système et/ou leur composition sont entièrement dépendants de l'application précise du système de traitement de données, ainsi que des besoins propres de l'utilisateur.

## Revendications

1. Architecture de système de traitement de l'information, ledit système comprenant une plate-forme matérielle (20) coopérant avec un ensemble de produits logiciels, caractérisée en ce que ledit ensemble est subdivisé en sous-ensembles dits domaines (21-24) comprenant chacun au moins un desdits produits logiciels (40-42), en ce que chaque domaine (21-24) contient un sous-ensemble dit descripteur (3) donnant accès à des informations spécifiques déterminées (30-32), lesdites informations comprenant au moins un identifiant (30) du domaine et des données (32) décrivant les produits logiciels le composant, et en ce qu'il est prévu des moyens permettant l'installation et/ou la mise à jour desdits domaines (21-24) à partir de règles prédéterminées et desdites informations spécifiques déterminées (30-32).

2. Architecture selon la revendication 1, caractérisée en ce que ledit identifiant (30) comprend au moins des informations de nom et de version de domaine.

3. Architecture selon la revendication 1, caractérisée en ce que lesdits produits logiciels appartiennent à deux catégories, une première catégorie représentant des produits logiciels, dits entièrement intégrés auxdits domaines (21-24), et obéissant à des règles d'installation et de mise à jour standardisées, communes au système (2), et une deuxième catégorie représentant des produits hétérogènes, dits externes, conservant des règles spécifiques d'installation et de mise à jour.

4. Architecture selon la revendication 1, caractérisée en ce que lesdites informations spécifiques déterminées comprennent en outre une série d'attributs (31) associés auxdits domaines (21-24), décrivant des caractéristiques fonctionnelles spécifiques associées à ceux-ci.

5. Architecture selon les revendications 3 et 4, caractérisée en ce qu'un premier attribut est dit "niveau d'insertion" et représente, selon une échelle prédéterminée, le niveau d'intégration et de contrôle desdits produits logiciels (P₀_{*i*} à P₃_{*j*}) constituant un domaine déterminé (D_{*j*}).

6. Architecture selon la revendication 5, caractérisée en ce que ladite échelle de niveaux d'insertion comprend un niveau supérieur (N₃) pour lequel tous lesdits produits logiciels sont des produits logiciels (P₃_{*i*} à P₃_{*j*}) dits entièrement intégrés obéissant auxdites règles d'installation et de mise à jour standardisées communes au système (2).

7. Architecture selon la revendication 5, caractérisée en ce que ladite échelle de niveaux d'insertion comprend des niveaux intermédiaires (N₀-N₂) pour lesquels tout ou partie desdits produits logiciels (P₀_{*i*} à P₂_{*j*}) sont des produits dits externes, en ce qu'au moins une partie de ces produits logiciels externes (P₁_{*i*}, P₂_{*i*}, P₂_{*j*}) sont associés à une information dite de version, et en ce qu'il est prévu des moyens de comparaison avec lesdites informations spécifiques pour effectuer un contrôle de cohérence lors de l'installation de ces produits logiciels dans un domaine déterminé (D_{*j*}) et/ou leur mise à jour.

8. Architecture selon les revendications 3 et 4, caractérisée en ce qu'un deuxième attribut est dit "type d'occurrence" et représente la combinaison du nombre d'instances d'un domaine déterminé (D_{*j*}) qui peuvent être installées et coexister sur ledit système (2), avec la possibilité ou non d'exécuter simultanément ces instances.

9. Architecture selon la revendication 8, caractérisée en ce que les types d'occurrence sont au nombre de trois : un premier offrant la possibilité d'une seule installation dudit domaine déterminé (D_{*j*}) dans le système (2) et d'une seule exécution, un deuxième offrant la possibilité d'une installation multiple et d'une seule exécution, et un troisième offrant la possibilité d'une installation multiple et d'une exécution multiple.

10. Architecture selon les revendications 3 et 4, caractérisée en ce qu'un troisième attribut est dit "dépendances" et pointe au moins un autre domaine dont la présence dans ledit système (2) est obligatoire pour le fonctionnement de tout ou partie desdits produits logiciels d'un domaine déterminé (D_{*j*}).

11. Architecture selon la revendication 1, caractérisée en ce que lesdites données sur les produits logiciels composant un domaine déterminé (D_{*j*}) comprennent une liste décrivant le contenu de ce domaine et un jeu de règles d'installation et de mise à jour du domaine et desdits produits logiciels le composant.

12. Architecture selon l'une quelconque des revendications 1 à 11, caractérisée en ce que ledit système (2) comprend au moins un premier domaine spécifique (21), dit de base, fournissant un logiciel de système d'exploitation.

13. Architecture selon la revendication 12, caractérisée en ce que ledit système (2) comprend au moins un deuxième domaine spécifique (23) fournissant un moniteur d'exploitation du système.

14. Architecture selon la revendication 13, caractérisée en ce que ledit système (2) comprend en outre un troisième domaine spécifique (24), dit de service, comprenant au moins des outils logiciels permettant l'installation et/ou la mise à jour de tout ou partie desdits domaines (21) et des produits logiciels les composant.

15. Architecture selon l'une quelconque des revendications précédentes, caractérisée en ce que lesdits domaines (D_{*j*}) présentent une structure hiérarchique à quatre niveaux, lesdits produits logiciels (P_{*i*}) représentant un premier niveau et comprenant, chacun, au moins un module (M_{*i*}₁-M_{*i*}₃) représentant un deuxième niveau, chaque module (M_{*i*}₁-M_{*i*}₃) comprenant au moins un jeu de fichiers (FS_{*i*}₁-FS_{*i*}₃₂) représentant un troisième niveau, et chaque jeu de fichiers (FS_{*i*}₁-FS_{*i*}₃₂) comprenant au moins un fichier (F_{*i*}₁₁-F_{*i*}₃₂₂) représentant un quatrième niveau, et en ce qu'un fichier déterminé n'appartient qu'à un seul jeu de fichiers, un jeu de fichier appartient à un seul module et un module appartient à un seul produit logiciel.

16. Architecture selon la revendication 15, caractérisée en ce que chacun desdits domaines (D_{*j*}) comprend au moins un module contenant un jeu de fichiers spécifiques pour l'enregistrement dudit identifiant de domaine et desdites données sur les produits logiciels composant le domaine.

17. Architecture selon la revendication 15, caractérisée en ce que les jeux de fichiers associés aux produits logiciels dits externes contiennent des données décrivant ces produits logiciels externes et permettant le contrôle de leur version lors de leur installation dans un domaine déterminé et/ou leur mise à jour dans ce domaine.

18. Architecture selon l'une quelconque des revendications 15 à 17, caractérisée en ce que lesdits jeux de fichiers présents dans un domaine déterminé (D_{*j*}) sont disjoints.

## Claims

1. Architecture for an information-processing system, said system comprising a hardware platform (20) co-operating with an assembly of software products, characterised in that said assembly is subdivided into sub-assemblies known as domains (21-24) each comprising at least one of said software products (40-42), in that each domain (21-24) contains a sub-assembly known as a descriptor (3) giving access to given specific information (30-32), said information comprising at least one identifier (30) of the domain and data (32) describing the software products composing it, and in that provision is made for means permitting the installation and/or updating of said domains (21-24) using predetermined rules and said given specific information (30-32).

2. Architecture according to Claim 1, characterised in that said identifier (30) comprises at least information on the name and version of the domain.

3. Architecture according to Claim 1, characterised in that said software products belong to two categories, a first category representing software products, said to be completely integrated into said domains (21-24), and obeying standard installation and updating rules, common to the system (2), and a second category representing heterogeneous products, said to be external, preserving specific installation and updating rules.

4. Architecture according to Claim 1, characterised in that said given specific information further comprises a series of attributes (31) associated with said domains (21-24), describing specific functional characteristics associated therewith.

5. Architecture according to Claims 3 and 4, characterised in that a first attribute is known as "insertion level" and represents, according to a predetermined scale, the level of integration and control of said software products (P₀_{*i*} to P₃_{*j*}) constituting a given domain (D_{*j*}).

6. Architecture according to Claim 5, characterised in that said scale of insertion levels comprises an upper level (N₃) for which all said software products are software products (P₃_{*i*} to P₃_{*j*}) said to be completely integrated, obeying said standard installation and updating rules common to the system (2).

7. Architecture according to Claim 5, characterised in that said scale of insertion levels comprises intermediate levels (N₀-N₂) for which all or some of said software products (P₀_{*i*} to P₃_{*j*}) are said to be external products, in that at least some of these external software products (P₁_{*i*}, P₂_{*i*}, P₂_{*j*}) are associated with what is known as version information, and in that means are provided for comparison of said specific information in order to carry out a consistency check on installation of these software products in a given domain (D_{*j*}) and/or on updating of the same.

8. Architecture according to Claims 3 and 4, characterised in that a second attribute is known as "occurrence type" and represents the combination of the number of instances of a given field (D_{*j*}) that can be installed and can coexist in said system (2), with or without the possibility of executing these instances simultaneously.

9. Architecture according to Claim 8, characterised in that the occurrence types are three in number: a first one offering the possibility of single installation of said given domain (D_{*j*}) in the system (2) and single execution, a second one offering the possibility of multiple installation and single execution, and a third one offering the possibility of multiple installation and multiple execution.

10. Architecture according to Claims 3 and 4, characterised in that a third attribute is known as "dependences" and points to at least one other domain, the presence of which in said system (2) is obligatory for the functioning of all or some of said software products in a given domain (D_{*j*}).

11. Architecture according to Claim 1, characterised in that said data on the software products composing a given domain (D_{*j*}) comprise a list describing the content of this domain and a set of installation and updating rules for the domain and for said software products composing it.

12. Architecture according to any one of Claims 1 to 11, characterised in that said system (2) comprises at least one first specific domain (21) described as basic, supplying operating system software.

13. Architecture according to Claim 12, characterised in that said system (2) comprises at least one second specific domain (23) supplying an operating monitor for the system.

14. Architecture according to Claim 13, characterised in that said system (2) further comprises a third specific domain (24) known as a service domain, comprising, at least, software tools permitting the installation and/or updating of all or some of said domains (21) and the software products composing them.

15. Architecture according to any one of the preceding claims, characterised in that said domains (D_{*j*}) have a four-level hierarchical structure, said software products (P_{*i*}) representing a first level and each comprising at least one module (M_{*i*}₁-M_{*i*}₃) representing a second level, each module (M_{*i*}₁-M_{*i*}₃) comprising at least one set of files (FS_{*i*}₁-FS_{*i*}₃₂) representing a third level, and each set of files (FS_{*i*}₁-F_{*i*}₃₂) comprising at least one file (F_{*i*}₁₁-F_{*i*}₃₂₂) representing a fourth level, and in that a given file belongs to just one set of files, a set of files belongs to a single module and a module belongs to a single software product.

16. Architecture according to Claim 15, characterised in that each of said domains (D_{*j*}) comprises at least one module containing a set of specific files for recording said domain identifier and said data on the software products composing the domain.

17. Architecture according to Claim 15, characterised in that the sets of files associated with the software products said to be external contain data describing these external software products and permitting version control thereof on installation in a given domain and/or updating thereof in this domain.

18. Architecture according to any one of Claims 15 to 17, characterised in that said sets of files present in a given field (D_{*j*}) are discrete.

## Patentansprüche

1. Datenverarbeitungssystem-Architektur, wobei das System eine Hardware-Plattform (20) umfaßt, die mit einer Gesamtheit von Software-Produkten zusammenwirkt, dadurch gekennzeichnet, daß die Gesamtheit in Domänen (21-24) genannte Untereinheiten unterteilt ist, wovon jede wenigstens eines der Software-Produkte (40-42) enthält, daß jede Domäne (21-24) eine Deskriptor (3) genannte Untereinheit enthält, die Zugriff auf bestimmte spezifische Informationen (30, 32) ermöglicht, wobei die Informationen wenigstens einen Identifizierer (30) der Domäne sowie Daten (32), die die sie bildenden Software-Produkte beschreiben, enthalten, und daß Mittel vorgesehen sind, die die Installation und/oder die Aktualisierung der Domänen (21-24) anhand vorgegebener Regeln und der bestimmten spezifischen Informationen (30-32) ermöglichen.

2. Architektur nach Anspruch 1, dadurch gekennzeichnet, daß der Identifizierer (30) wenigstens Informationen bezüglich des Namens und der Version der Domäne umfaßt.

3. Architektur nach Anspruch 1, dadurch gekennzeichnet, daß die Software-Produkte zu zwei Kategorien gehören, wovon eine erste Software-Produkte repräsentiert, die vollständig in die Domänen (21-24) integriert sind und standardisierten Installations- und Aktualisierungsregeln gehorchen, die dem System (2) gemeinsam sind, und wovon eine zweite heterogene Produkte, die extern genannt werden, repräsentiert, die spezifische Installations- und Aktualisierungsregeln bewahren.

4. Architektur nach Anspruch 1, dadurch gekennzeichnet, daß die bestimmten spezifischen Informationen außerdem eine Reihe von Attributen (31) umfassen, die den Domänen (21-24) zugeordnet sind und spezifische funktionale Eigenschaften, die ihnen zugeordnet sind, beschreiben.

5. Architektur nach den Ansprüche 3 und 4, dadurch gekennzeichnet, daß ein erstes Attribut "Einfügungsebene" genannt wird und auf einer vorgegebenen Skala die Integrations- und Kontrollebene der eine bestimmte Domäne (Dⱼ) bildenden Software-Produkte (P₀ᵢ bis P₃ⱼ) repräsentiert.

6. Architektur nach Anspruch 5, dadurch gekennzeichnet, daß die Skala der Einfügungsebenen eine obere Ebene (N₃) umfaßt, für die sämtliche Software-Produkte sogenannte vollständig integrierte Software-Produkte (P₃ᵢ bis P₃ⱼ) sind, die standardisierten Installations- und Aktualisierungsregeln, die dem System (2) gemeinsam sind, gehorchen.

7. Architektur nach Anspruch 5, dadurch gekennzeichnet, daß die Skala der Einfügungsebenen Zwischenebenen (N₀-N₂) umfaßt, für die alle oder ein Teil der Software-Produkte (P₀ᵢ bis P₂ⱼ) sogenannte externe Produkte sind, daß wenigstens einem Teil dieser externen Software-Produkte (P₁ᵢ, P₂ᵢ, P₂ⱼ) eine sogenannte Versionsinformation zugeordnet ist und daß Mittel zum Vergleichen mit den spezifischen Informationen vorgesehen sind, um eine Kontrolle der Kohärenz bei der Installation dieser Software-Produkte in einer bestimmten Domäne (Dⱼ) und/oder ihrer Aktualisierung vorzunehmen.

8. Architektur nach den Ansprüche 3 und 4, dadurch gekennzeichnet, daß ein zweites Attribut "Auftrittstyp" genannt wird und die Kombination aus der Anzahl von Instanzen einer vorgegebenen Domäne (Dⱼ), die in dem System (2) installiert werden können und gemeinsam existieren können, und aus der Möglichkeit, diese Instanzen gleichzeitig auszuführen, repräsentiert.

9. Architektur nach Anspruch 8, dadurch gekennzeichnet, daß die Auftrittstypen in der Anzahl drei vorliegen: ein erster bietet die Möglichkeit einer einzigen Installation der bestimmten Domäne (Dⱼ) im System (2) und einer einzigen Ausführung, ein zweiter bietet die Möglichkeit einer mehrfachen Installation und einer einzigen Ausführung und ein dritter bietet die Möglichkeit einer mehrfachen Installation und einer mehrfachen Ausführung.

10. Architektur nach den Ansprüchen 3 und 4, dadurch gekennzeichnet, daß ein drittes Attribut "Abhängigkeiten" genannt wird und wenigstens eine weitere Domäne bezeichnet, deren Vorhandensein im System (2) für die Funktion aller oder eines Teils der Software-Produkte einer bestimmten Domäne (Dⱼ) obligatorisch ist.

11. Architektur nach Anspruch 1, dadurch gekennzeichnet, daß die Daten in den Software-Produkten, die eine bestimmte Domäne (Dⱼ) bilden, eine Liste, die den Inhalt dieser Domäne beschreibt, sowie einen Satz von Installations- und Aktualisierungsregeln der Domäne und der sie bildenden Software-Produkte umfaßt.

12. Architektur nach einem der Ansprüche 1 bis 11, dadurch gekennzeichnet, daß das System (2) wenigstens eine erste spezifische Domäne (21) enthält, die Basis genannt wird und eine Betriebssystem-Software liefert.

13. Architektur nach Anspruch 12, dadurch gekennzeichnet, daß das System (2) wenigstens eine zweite spezifische Domäne (23) aufweist, die einen Monitor für das Betriebssystem liefert.

14. Architektur nach Anspruch 13, dadurch gekennzeichnet, daß das System (2) außerdem eine dritte spezifische Domäne (24) aufweist, die Dienst genannt wird und wenigstens die Software-Werkzeuge enthält, die die Installation und/oder die Aktualisierung aller oder eines Teils der Domänen (21) und der sie bildenden Software-Produkte ermöglichen.

15. Architektur nach einem der vorhergehenden Ansprüche, dadurch gekennzeichnet, daß die Domänen (Dⱼ) eine hierarchische Struktur mit vier Ebenen aufweisen, wobei die Software-Produkte (Pᵢ) eine erste Ebene repräsentieren und jeweils wenigstens ein Modul (Mᵢ₁-Mᵢ₃) enthalten, das eine zweite Ebene repräsentiert, wobei jedes Modul (Mᵢ₁-Mᵢ₃) wenigstens einen Satz von Dateien (FSᵢ₁-FSᵢ₃₂) enthält, die eine drittes Ebene repräsentieren, und jeder Satz von Dateien (FSᵢ₁-FSᵢ₃₂) wenigstens eine Datei (Fᵢ₁₁-Fᵢ₃₂₂) enthält, die eine vierte Ebene repräsentiert, und daß eine bestimmte Datei nur einem einzigen Satz von Dateien angehört, wobei ein Satz von Dateien einem einzigen Modul angehört und ein Modul einem einzigen Software-Produkt angehört.

16. Architektur nach Anspruch 15, dadurch gekennzeichnet, daß jede der Domänen (Dⱼ) wenigstens ein Modul enthält, das einen Satz von spezifischen Dateien für die Eintragung des Identifizierers der Domäne und der Daten bezüglich der die Domäne bildenden Software-Produkte enthält.

17. Architektur nach Anspruch 15, dadurch gekennzeichnet, daß die den sogenannten externen Software-Produkten zugeordneten Sätze von Dateien Daten enthalten, die diese externen Software-Produkte beschreiben und die Kontrolle ihrer Version bei ihrer Installation in einer bestimmten Domäne und/oder ihrer Aktualisierung in dieser Domäne ermöglichen.

18. Architektur nach einem der Ansprüche 15 bis 17, dadurch gekennzeichnet, daß die Sätze von Dateien, die in einer bestimmten Domäne (Dⱼ) vorhanden sind, disjunkt sind.
